# EUROPEAN PATENT APPLICATION

(11) **EP 1 426 254 A1**
(43) Date of publication of application: **09.06.2004**
(21) Application number: 03017017.9
(22) Date of filing: 26.07.2003
(51) Int. Cl.: B60R 25/02

(54) **Mechanical device for blocking the steering shaft of a vehicle**

(30) Priority: 04.12.2002 IT BA20020043
(71) Applicant: Block Shaft S.r.l., 72015 Fasano (Brindisi) (IT)
(72) Inventor: Lacirignola, Emilio, 72015 Fasano (Brindisi) (IT)

(57) **Abstract**

The application relates to a mechanical device for blocking a steering shaft (A) comprising a stem (1) in which a locking pin (2) is movable back and forth. In one embodiment, the stem (1) is welded to an interface (4) which in turn is welded to an external surface of a steering shaft collar. Also, the pin (2) is provided with a retractable head (6) which is biased toward the steering shaft (A) by a compression spring (7). The interface (4) provides adaption of the mechanical device to different constructions of steering columns, while the retractable head (6) eliminates damage to the steering shaft (A) during a theft attempt. If a thief tries to turn the steering shaft (A) with a large force, the head (6) will retract and allow turning of the steering shaft (A) in a limited range before blocking its rotation again. In a further embodiment, there is no interface (4), and the pin (2) is rigid without moving or elastically reactive elements. In both embodiments, the pin (2) is provided with a cavity (8) for receiving a lock (9).

## Description

This invention consists of a mechanical device to apply to the steering shaft of any vehicle in order to stop it from being rotated.

It is well-known that almost all vehicles with two or four wheels have mechanical steering wheel locks which are engaged with a special key and stop the steering shaft from rotating, that is the steering wheel if it is a car or the handlebars if it is a motocycle.

More specifically, when the key is in locked position, rotating the wheel to a specific position causes the steering lock to be inserted, that is a suitably loaded pin comes out and enters in operative contact with a bushing welded to the steering shaft in order to stop it from rotating.

This locking mechanism has been shown to be very vulnerable in any case: indeed the steering wheel can easily be forced or even a sharp blow like a kick for instance can break the pin and free the steering wheel.

In order to solve this problem, steering wheel locking devices have been developed to be applied to the steering wheel in addition to the standard fitted devices. Although these are characterised by the same operating principle, they are made with highly resistant material which guarantees that they are unbreakable.

These devices consist of a steel pin which comes into operative contact with the cavity of a bushing, also made of steel, welded to the steering column; the pin slides in a steel stem, located below the steering column and welded to the collar of the steering column within which the steering shaft rotates.

It is, therefore, impossible to steal the vehicle by simply sharply rotating the steering wheel: it would be necessary to use special tools which would inevitably lead to damaging the steering shaft.

This is, however, the main problem of this kind of steering wheel lock: indeed, the irreparable damage to the steering shaft resulting from an attempt to force it makes the vehicle impossible to drive or in any case dangerous for others' safety because it causes possible accidents which can involve other means.

A further problem deriving from damaging the steering shaft is represented by the significant economic damage resulting from repairing or replacing it, if the attempted theft is not successful.

A further problem resulting from these devices is represented by the fact that they are not universally applicable to any kind of steering wheel: the stem in which the pin slides must be welded to the collar of steering column in which the steering shaft rotates; the sizes and shape of this collar, however, vary in all car models, thus requiring the end of the stem to be adapted, which means that it is difficult to apply and impossible to standardise industrially.

The main aim of this invention is to solve these problems, by providing a steering shaft locking device which is made with suitable materials to guarantee the necessary shear resistance and which does not damage the steering shaft if it is subjected to forced rotation or if tools for breaking the device are used.

Another important aim is that of providing a device that can be applied to any steering column, that is on that can be mass produced.

For these aims, this invention resolves the problem of damage to the steering shaft following forced rotation of the latter during an attempted theft, in any case ensuring that the vehicle cannot be driven off.

The invention also resolves the problem of allowing the device to be applied to any steering column.

These and other aims are achieved by the mechanical device described in this invention, which is described below with the help of the attached drawing plates which illustrate the following figures in a preferable but not limiting design and not without further perfection within the invention:
fig. 1: side view with partially removed parts of the steering column of a vehicle on which the device described in this invention is applied;
fig. 2: detail of the retracting head of the locking pin;
fig. 3: the longitudinal section of the device applied to a steering shaft in rest condition or with the steering wheel unlocked;
fig. 4: the same view as fig. 3, with the steering wheel locked;
fig. 5: the same view as figs. 3 and 4, following the forced rotation of the steering wheel;
fig. 6: exploded side view and longitudinal section of the device with an interface suitable for adapting to a particular type of steering column;
fig. 7: the same views as fig 6, with an interface and steering column of a different shape;
fig. 8: the views of the previous figure 6 and 7, in a further variation of the adapting interface;
fig. 9: the exploded view in a longitudinal section of a variation of design of the device;
fig. 10: the longitudinal section of the device of fig. 9, in rest condition or with the steering wheel unlocked;
fig. 11: the same view as fig. 9, with the steering wheel locked;

The blocking device described in this invention basically consists of a stem 1 inside which a pin 2 slides, which comes into contact with the notch 3.1 of a bushing 3 welded to the steering shaft A.

The stem 1 is a single body made of steel which has a slightly tapered external shape and an internal cavity 5 of a suitably cylindrical shape in which the fixing pin 2 can slide.

The tapered shape of the stem prevents an effective grip for instance with pliers in order to cause the welding which attaches it to the collar to break, forcing it to rotate or eradicating it.

One of the main innovations of this device is that it easily adapts to collars of any shape, dimension and section.

The liner of the steering column P, that is the metallic liner in which the steering shaft A rotates, usually varies in shape and size from car to car; as has already been said, the current state of the art foresees adapting the end of the stem 1 in order to permit the uniform coupling to the surface of the collar to which it is joined by welding.

The problem has been solved by introducing an adapting interface 4, made in various shapes and sizes, which is placed between the stem 1 and the liner of the steering column P making the coupling between the two elements easy.

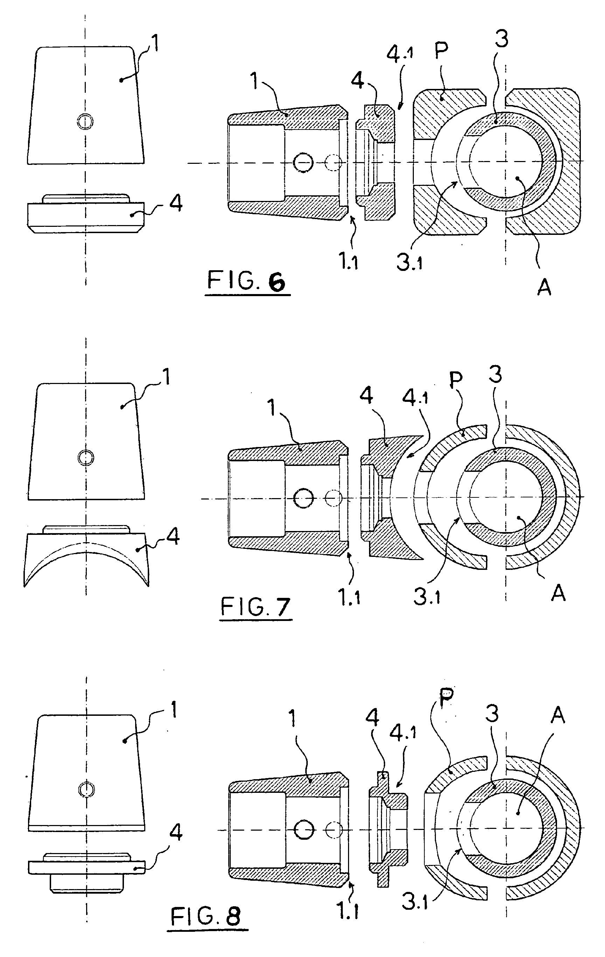

In more detail the interface 4 is a concave body with a circular transversal section, whose lower end 4.1 is shaped to be coupled to the end 1.1 of the stem 1, while the opposite end 4.2 is suitably shaped to adapt to the shape, size and section of the steering column liner P (figures 6, 7 and 8).

The interface 4 is first attached to the end of the stem 1.1 by welding and then the single body formed by the two elements is once again welded to the external surface of the collar near the circular hole made in it to allow the end of pin 2 which blocks the rotation of the steering shaft to pass through.

The interface 4 is thus made in different shapes and sizes in order to allow it to be adapted to the different collars currently existing; figures 6, 7 and 8, respectively illustrate an interface with a flat end 4.2, suitable for a collar with a flat contact surface, one with a concave end for a circular transversal or generally curved section or with a short cylindrical end to be directly engaged into the hole in the collar.

The introduction of the adapter interface 4, thus does away with the need to adapt the end of the stem to the collar every time, also allowing all the parts making up the device, that is the stem 1, the pin 2 and the adapter interface 4, to be mass produced thus lowering the costs of production and the installation manpower, more simple assembly and rationalising the warehouse stock.

As already mentioned, inside the cavity 5 of the stem 1, there is a pin 2 which has the job of blocking the rotation of the steering axle.

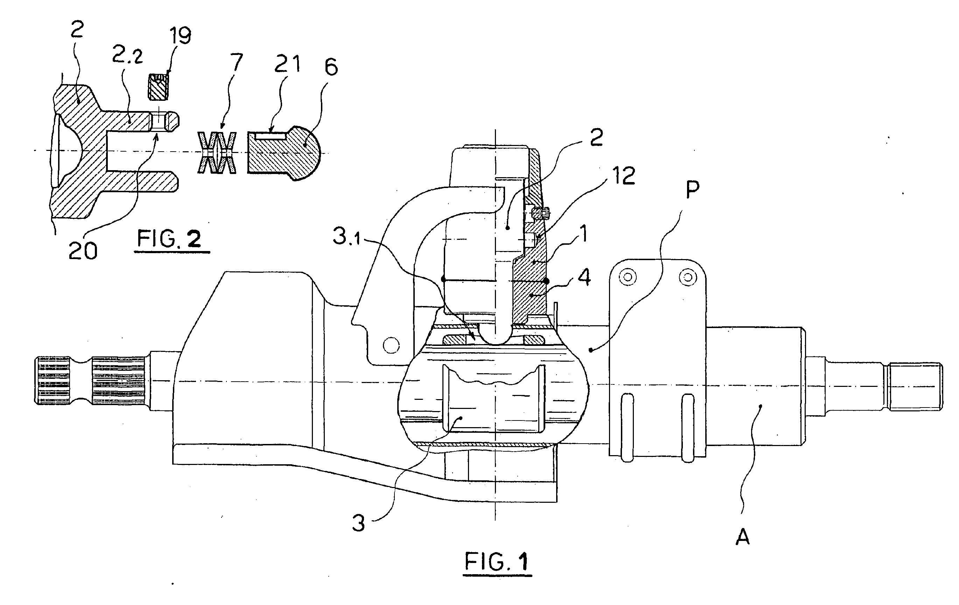

The pin 2 is a partially hollow cylindrical body whose lower end 2.1 is open to allow a suitable lock 9 to be inserted and fitted. This permits axial excursion of the pin 2 inside the stem 1, while the opposite end to 2.1 is shaped like a bottleneck and has a cylindrical terminal 2.2 whose end is open (see fig. 2).

A retracting head 6 can move inside the cavity of terminal 2.2, by means of a suitable expansion spring 7, which, by exerting a high intensity pressure on the head 6, pushes the latter towards the stop provided by a dowel 19 screwed in a hole 20 made on the lateral surface of the cylindrical terminal 2.2 and operating in a flute 21 made on the lateral surface of the head 6.

The retracting head 6, represents an important innovation because it allows the steering wheel to be blocked but at the same time it prevents damage if the thief attempts to force it; in this case the vehicle cannot be driven away in any case but the steering wheel is not damaged, protecting the well-being of the other means circulating and preventing costly repairs for the owner.

Let us, therefore, see how the locking system works in detail.

A bushing 3 is welded around the steering shaft in an axial position, so that its notch 3.1, which is to hold the head 6 of the pin 2, is in correspondence to the hole of the collar through which the cylindrical terminal 2.2 passes.

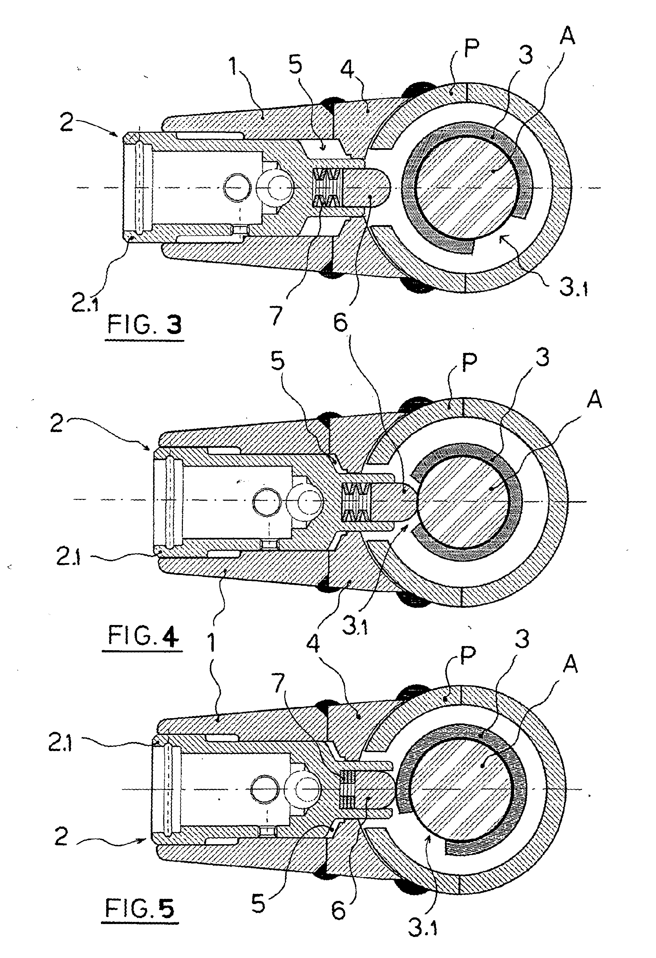

The locking of the steering wheel occurs when this terminal is rotated until the notch 3.1 is aligned with the bushing hole, and the pin 2 has slid inside the cavity 5 of the stem 1 until it stops, that is until the head 6 comes into operative contact with the notch 3.1 of the bushing 3 (figure 4).

The steering wheel is now blocked; however, if, following an attempt to steal the vehicle, the steering wheel is forced, the retracting head 6, suitably rounded at its external end, strained by the lateral sides of the notch 3.1, returns inside the cavity of the cylindrical terminal 2.2, compressing the spring 7 and allowing the steering wheel to perform a full turn, after which the notch 3.1 finds itself once again in correspondence to the head 6 which pushed out by the spring 7, once more comes into contact with the notch 3.1 of the bushing 3.

It is once more underlined that the thrust pressure exerted by the spring 7 on the head 6, is of high intensity, thus in order to oppose this thrust and to compress the spring, i.e make the head 6 return, a force of equally high intensity must be exerted on the steering wheel.

As a result of this, the forced rotation of the steering wheel does not damage the steering axle but in any case prevents the vehicle from being driven because, while driving, it would be impossible to constantly exert the necessary force required to continually make the head 6 return after each steering movement.

In order to magnify this difficulty of driving following the forced rotation of the steering wheel, it is possible to foresee the application of a bushing 3 on the steering shaft fitted with two or more grooves 3.1, so that the only partial rotational movement of the steering wheel causes it to lock.

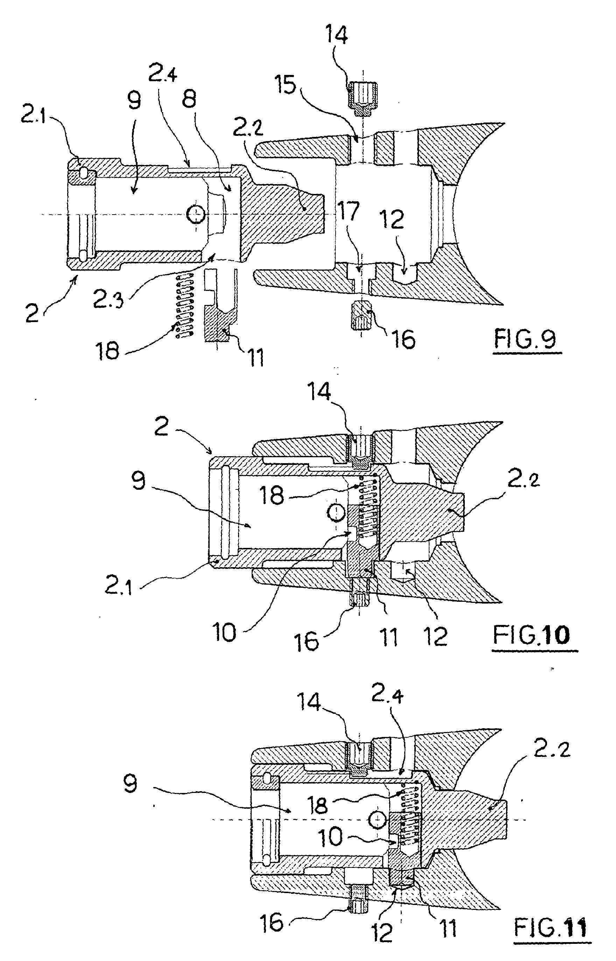

There now follows a more detailed description of the pin 2 and the stem 1, according to the illustrated sequence in figures 9, 10 and 11, in which the adapter interface 4 and the retracting head 6 do not appear for simplicity.

As already mentioned, the cavity 8 of the pin 2 is occupied by a cylinder lock 9 whose activation allows the axial excursions of the pin inside the stem, to lock or free the steering shaft.

For this, the end of the barrel of the lock cylinder has a small pin 10 which comes into contact with a special peg 11 positioned radially to pin 2 causing the excursion when the barrel rotates with the key.

When the pin 2 is in locking position, the peg 11 comes out of a special housing hole 2.3 made on the lateral surface of the pin, and fits into a cavity 12 of the stem 1, locking the pin in that axial position.

When the peg 11 then returns inside the pin following rotation of the barrel caused by the key, the pin is pushed out of the stem by a spring 13 located in a ring shaped chamber between the stem and the pin itself, freeing the steering shaft.

The axial sliding of the pin 2 inside the shaft 1, is limited by a longitudinal flute 2.4 made on the external surface in which a pin 14 screwed in a hole 15 on the lateral surface of the stem 1 engages and comes out internally in the cavity 5 of the latter.

This flute-pin action, not only provides a stop but also prevents the pin 2 from rotating inside the stem.

In order to prevent the key from coming out when the pin is in system release position and visually coming out of the stem, that is in steering shaft release position, a special dowel 16 is used. This is partially screwed in a hole 17 made on the lateral surface of the stem and in correspondence to the peg 11 and permits this peg, triggered by a spring 18, to partially occupy the cavity 17 preventing the barrel of the lock cylinder 9 from recovering the key extraction position.

If it were decided to extract the key when the pin is in release position, just unscrew the dowel 16 so that the peg 11 can complete the whole radial stroke with respect to pin 2, thus occupying the whole cavity 17 and allowing the barrel to recover the rest position which allows the key to be removed.

The operations described and illustrated refer to the use of the device on a motor vehicle; the same locking system can be applied in any case where it is necessary to block the rotation of a shaft.

## Claims

1. "Mechanical device for blocking the steering shaft of a vehicle" including a bushing (3) fixed to the steering wheel and a stem (1) in which the fixing pin slides (2) incorporating a lock (9), **characterised by** the fact that the stem (1) is welded to the collar of the steering column in which the steering shaft rotates (A), by using an adapting interface (4) which is firstly welded to the stem (1) and subsequently the single body consisting of the stem (1) and of the interface (4) is welded to the external surface of the steering column liner in correspondence to the circular hole made on it to allow the end of the pin (2) which blocks the rotation of the steering shaft to pass through and fit into the notch (3.1) of the bushing (3), since this end of the pin (2) consists of a cylindrical terminal (2.2) it has an open end and a cavity in which a retractable head (6) can be fitted, triggered by a suitable expansion spring (7) which pushes the head (6) towards the outside allowing it to fit into the notch when it is aligned with the pin (2) and the hole made on the liner.

2. Mechanical locking device as claimed in claim 1, **characterised by** the fact that the adapter interface (4) is positioned between the stem (1) and the steering column sleeve making it easy to couple the two elements, this interface consists of a hollow body of a suitable transversal section, for instance circular, whose lower end (4.1) is shaped to couple with the end (1.1) of the stem (1), while the other end (4.2) is suitably shaped to adapt to the shape, size and section of the liner; the interface (4) can be made in different shapes and sizes in order to allow it to be adapted to the different collars currently existing.

3. Mechanical locking device as claimed in claims 1 and 2, **characterised by** the fact that the spring (7) exerts a suitable load on the head (6), pushing it outwards to its final stop provided by a dowel (19) screwed into a hole (20) made on the side surface of the cylindrical terminal (2.2) and operating in a flute (21) made on the lateral surface of the head (6), the latter, whose operative end is appropriately shaped, returns inside the cavity of the cylindrical terminal (2.2) when it is strained by the lateral sides of the notch (3.1) following the forced rotation of the steering wheel, the subsequent compression of the spring (7) requiring the application on the steering wheel of a force of such an intensity as to contrast the pressure exerted by this spring on the head (6).

4. Mechanical locking device as claimed in the previous claims, **characterised by** the fact that the return of the head (6) inside the cavity of the cylindrical terminal (2.2) following the forced rotation of the steering wheel allows the latter to make a complete rotation, or alternatively partial rotations if there are several notches (3.1) on the bushing (3), at the end of each of these, the head (6) meets the notch (3.1) once again and, pushed by the spring (7), comes out, once more creating an operative contact with this notch (3.1), this operating sequence prevents the steering shaft from being damaged following attempts of theft.

5. Mechanical locking device as claimed in the previous claims, **characterised by** the fact that the stem (1) has a tapered external shape in order to prevent it from being easily clasped.

6. Mechanical locking device as claimed in the previous claims, **characterised by** the fact that in a further design, the stem (1) is a single body made of steel and with a cylindrical shape internal cavity (5) in which a locking pin (2) can move, this pin consists of a partially hollow cylindrical body whose lower end (2.1) is open to allow a suitable lock (9) to be inserted in its cylindrical cavity (8), while the opposite end is shaped like a bottle neck and creates a body with the cylindrical terminal (2.2) in which the retracting head moves (6).

7. Mechanical locking device as claimed in claim 6, **characterised by** the fact that the end of the barrel of the lock cylinder (9) has a small pin (10) which causes the axial excursion of a peg (11), in a radial position near the base of the cylindrical housing (8) of the pin (2), and coming out of a suitable hole (2.3) made on the lateral surface of this pin (2), the locking position of this being obtained when the peg (11) enters a cavity (12) of the stem (1), while the release position is when the peg (11), after having returned inside the pin (2) following the rotation of the barrel caused by the key, occupies the cavity (17) of the stem (1), the axial slide and the rotation of the pin (2) inside the stem (1), is then limited by a longitudinal flute (2.4) on the external surface in which a dowel (14) screwed into a hole (15) on the side surface of the stem (1) and coming inside the cavity (5) of the latter is engaged.

8. Mechanical locking device as claimed in claims 6 and 7, **characterised by** a spring (13) positioned in a ring shaped housing between the stem (1) and the pin (2), which pushes the pin externally to the stem when the peg (11) returns inside this pin following the rotation of the barrel, or of the key, to free the steering shaft; by a spring (18) which pushes the peg (11) outside the hole (2.3) made on the lateral surface of the pin (2), allowing it to occupy the cavities (12) and (17) of the side surface of the stem (1) to which respectively the axial positions of blocking and releasing of the steering shaft by the pin (2) correspond; by a dowel (16) partially screwed in the cavity (17) of the stem (1) which, by stopping the peg (11) from completely entering this cavity (17), does not allow the barrel of the lock cylinder (9) to recover the key extraction position and therefore it remains inserted.

9. Mechanical locking device as claimed in claims 6, 7 and 8, **characterised by** a pin (2) made up of a single rigid body without moving or elastically reactive elements, that is it has a rigid end (2.2) which does not return in case of forced rotation of the steering wheel and a stem (1) whose end (1.1) is suitably shaped in order to allow the collar of the steering column to be applied directly without positioning any interface.

10. Mechanical locking device as claimed in the previous claims, **characterised by** the fact that it can be applied to the steering shaft of any means or motor vehicle, motorcycle, trailer or transporting means with two or four wheels, and more generally wherever the rotation or travel of a shaft is to be blocked.

11. Mechanical locking device as claimed in the previous claims, **characterised by** the fact that all its parts as described in the previous claims can be easily industrialised, or mass produced, as no modification is required in the installation phase.
